# EUROPEAN PATENT APPLICATION

(11) **EP 4 624 132 A1**
(43) Date of publication of application: **01.10.2025**
(21) Application number: 22970111.5
(22) Date of filing: 27.12.2022
(51) Int. Cl.: B29C 48/275

(54) **EXTRUSION DEVICE, AND METHOD FOR KNEADING RESIN RAW MATERIAL**

(71) Applicant: The Japan Steel Works, Ltd., Tokyo 141-0032 (JP)
(72) Inventor: SAGA, Daigo, Tokyo 141-0032 (JP)
(74) Representative: Simmons & Simmons LLP (Munich)
(86) International application number: PCT/JP2022/048381
(87) International publication number: WO 2024/142322

(57) **Abstract**

Provided is an extrusion device by which energy discharged and discarded by a cooling means provided in the extrusion device is used within the same device, and energy usage efficiency is improved. Also provided is a method for kneading a resin raw material. An extrusion device 10 comprises: a cylinder 12 having an upstream area 12UA and a downstream area 12DA; a resin raw material supply unit 11 provided at the upstream area 12UA side of the cylinder 12; a screw disposed inside the cylinder 12 to convey and knead the resin raw material; and a resin raw material discharge part 15 provided at the downstream area 12DA side of the cylinder 12. The extrusion device 10 has: a heating means 14 provided in the upstream area 12UA of the cylinder to heat the resin raw material; a cooling means 16 provided in the downstream area 12DA of the cylinder to cool the cylinder 12; and piping 17 that is connected to the cooling means 16 and is disposed so as to connect the upstream area 12UA and the downstream area 12DA of the cylinder 12.

## Description

### TECHNICAL FIELD

The present invention relates to an extrusion apparatus and a method of kneading a resin raw material.

### BACKGROUND ART

Currently, resin products made of resin compositions have been used in a very wide variety of fields, and the used amount thereof has become enormous. In order to obtain these resin products, extrusion apparatuses to create resin raw materials such as resin pellets are used. In a certain region of a cylinder of the extrusion apparatus, a heater configured to heat and melt the resin raw material inside the cylinder is provided.

On the other hand, a cooler is necessary because there is a region in the cylinder in which an excessive heat is generated due to shear heat caused by the rotation of a screw when the resin raw material is conveyed and kneaded.

See, for example, Japanese Unexamined Patent Application Publication No. H06-23824 (Patent Document 1).

### RELATED ART DOCUMENTS

### PATENT DOCUMENTS

Patent Document 1: Japanese Unexamined Patent Application Publication No. H06-23824

### SUMMARY OF THE INVENTION

### PROBLEMS TO BE SOLVED BY THE INVENTION

There is a demand for improving energy efficiency in an extrusion apparatus provided with a heater and a cooler.

Other objects and novel features will become apparent from the description of this specification and the accompanying drawings.

### MEANS FOR SOLVING THE PROBLEMS

An extrusion apparatus disclosed in this application includes a cylinder having an upstream region and a downstream region, a supply unit of a resin raw material provided on a side of the upstream region of the cylinder, a screw arranged inside the cylinder and configured to convey and knead the resin raw material, and a discharge unit of the resin raw material provided on a side of the downstream region of the cylinder.

The extrusion apparatus further includes a heater provided in the upstream region of the cylinder and configured to heat the resin raw material, a cooler provided in the downstream region of the cylinder and configured to cool the cylinder, and a pipe arranged so as to connect the upstream region and the downstream region of the cylinder and connected to the cooler.

A method of kneading a resin raw material disclosed in this application includes (a) heating and melting the resin raw material supplied to a cylinder having an upstream region and a downstream region by a heater provided in the upstream region while conveying it inside the cylinder by a screw, (b) after the (a), cooling the cylinder by a cooler provided in the downstream region of the cylinder while kneading the resin raw material, (c) after the (b), discharging a kneaded material of the resin raw material from a discharge unit provided at a tip end of the cylinder, and (d) after the (b), flowing a fluid from the downstream region to the upstream region.

### EFFECTS OF THE INVENTION

According to the extrusion apparatus and the method of kneading the resin raw material disclosed in this application, it is possible to provide an extrusion apparatus and a method of kneading a resin raw material capable of improving the energy usage efficiency.

### BRIEF DESCRIPTION OF THE DRAWINGS

[FIG. 1] is a diagram illustrating a schematic configuration of an extrusion apparatus in one embodiment.
[FIG. 2] is an explanatory diagram for an example of an internal structure of a cylinder used in the extrusion apparatus of FIG. 1.
[FIG. 3] is a diagram illustrating an example of a screw shape used in the extrusion apparatus of FIG. 1.
[FIG. 4] is a diagram illustrating another example of the screw shape used in the extrusion apparatus of FIG. 1.
[FIG. 5] is a diagram illustrating another embodiment of the extrusion apparatus of FIG. 1.
[FIG. 6] is a diagram illustrating a modification of the extrusion apparatus of FIG. 1.
[FIG. 7] is a diagram illustrating another modification of the extrusion apparatus of FIG. 1.
[FIG. 8] is a diagram illustrating a schematic configuration of an extrusion apparatus used in an embodiment.

### DETAILED DESCRIPTION OF PREFERRED EMBODIMENTS

Hereinbelow, the embodiments will be described in detail with reference to the drawings. In all the drawings for describing the embodiments, members having the same function are denoted by the same reference characters, and repeated descriptions thereof will be omitted. In addition, in the following embodiments, descriptions of the same or similar parts will not be repeated in principle unless particularly necessary.

### <First Embodiment>

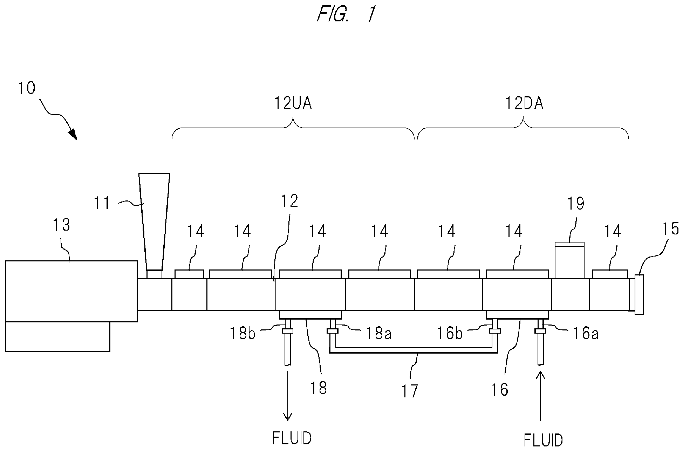

An overall configuration of an extrusion apparatus according to this embodiment and a method of kneading a resin raw material using the same will be described with reference to FIG. 1.

### [Extrusion Apparatus]

FIG. 1 is an explanatory diagram illustrating a schematic configuration of an extrusion apparatus 10 according to the first embodiment. The extrusion apparatus 10 is an apparatus used to obtain a resin material for molding made of a sufficiently kneaded resin raw material by heating a resin raw material to soften and melt it therein and then extruding the molten resin from a discharge unit provided at one end thereof.

This extrusion apparatus 10 includes a resin raw material supply unit 11, a cylinder 12 having an upstream region 12UA and a downstream region 12DA and provided with a screw therein, a rotation drive mechanism 13 configured to drive the screw inside the cylinder 12, a heater 14 provided in the upstream region 12UA, a discharge unit 15, and a cooler 16 provided in the downstream region 12DA.

Further, the extrusion apparatus 10 includes a pipe 17 configured to connect the upstream region 12UA and the downstream region 12DA and connected to the cooler 16, an auxiliary heater 18 provided in the upstream region 12UA and connected to the pipe 17, and a vent unit 19 capable of exhausting gas generated in the cylinder.

The resin raw material supply unit 11 is a member configured to supply a resin raw material to be a molding material to the cylinder 12. In this embodiment, for example, a thermoplastic resin is supplied as the resin raw material. The thermoplastic resin to be supplied may be in various forms such as pellets, powder, flakes, and others, and is fed from above to the resin raw material supply unit 11 by a feeder or the like to be supplied into the cylinder 12. As the resin raw material supply unit 11, for example, a hopper or the like may be provided so as to be connected to an upper opening of the cylinder 12.

The cylinder 12 is referred to also as a barrel and has a space formed therein for conveying the resin raw material, and a screw for conveying and kneading the resin raw material is provided in this space. The cylinder 12 is composed by, for example, connecting a plurality of cylinder blocks, and each cylinder block has a space capable of conveying the thermoplastic resin therein. This space is formed such that a single space penetrating the inside of the cylinder 12 is obtained when the plurality of cylinder blocks are connected.

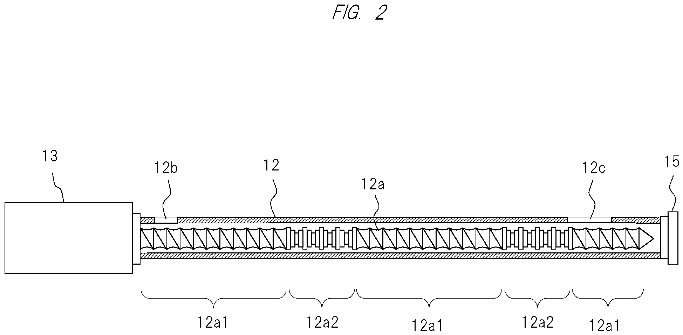

FIG. 2 is an explanatory diagram for the internal structure of the cylinder 12, a screw 12a is arranged in the space formed by connecting the plurality of cylinder blocks, and the screw 12a is connected to the rotation drive mechanism 13. Further, an upper opening 12b connected to the resin raw material supply unit 11 and an upper opening 12c connected to the vent unit 19 are illustrated in the cylinder 12 of FIG. 2.

The rotation drive mechanism 13 is a device configured to rotate the screw 12a provided inside the cylinder 12. By using the screw 12a rotated by the rotation drive mechanism 13, the resin raw material can be conveyed and kneaded inside the cylinder 12.

Note that the extrusion apparatus 10 may be a twin-screw extruder in which two screws are provided in the cylinder 12 or a single-screw extruder in which one screw is provided therein. In the case of the twin-screw extruder, the two screws are arranged and rotated parallel to each other. Two shafts may be arranged so as to mesh with each other, or so as not to mesh with each other.

The cylinder 12 has the upstream region 12UA and the downstream region 12DA based on the flow direction of the raw material resin. Namely, since the raw material resin is supplied from the resin raw material supply unit 11 into the cylinder 12, conveyed inside the cylinder 12, and discharged from the discharge unit 15 to the outside of the cylinder 12, there are the upstream region 12UA on the side of the resin raw material supply unit 11 and the downstream region 12DA on the side of the discharge unit 15 in the cylinder 12. At this time, the boundary between the upstream region 12UA and the downstream region 12DA can be set arbitrarily. For example, the region where the cylinder 12 is gradually heated to mainly increase the cylinder temperature can be set as the upstream region 12UA, and the region where the cylinder temperature is maintained at the same temperature after the resin material has been sufficiently heated and melted can be set as the downstream region 12DA.

As described above, the upstream region 12UA is a region where thermal energy is applied to the cylinder 12 from the outside to gradually increase its temperature, and is provided with the heater 14 configured to adjust the temperature of the cylinder 12. The heater 14 can be any known heater as long as it can heat the cylinder 12, and is not particularly limited. Examples of heat sources that make up the heater 14 include an electric heater, hot oil, and steam.

The resin raw material supplied from the resin raw material supply unit 11 is conveyed inside the cylinder 12 from the resin raw material supply unit 11 to the discharge unit 15, during which it is gradually heated and melted in the upstream region 12UA to be a molten material. The molten material thus obtained can be easily conveyed inside the cylinder 12, and is conveyed to the downstream region 12DA while being further heated. In this upstream region 12UA, the resin raw material can be heated up to the molding temperature.

As described above, the downstream region 12DA is a region where thermal energy is applied from the outside to the cylinder 12 to maintain its temperature, and is also provided with the heater 14 configured to adjust the temperature of the cylinder 12. The same heater as described above can be used as this heater 14.

The resin raw material heated and melted in the upstream region 12UA can be conveyed through the cylinder 12 while maintaining its molten state in the downstream region 12DA, and is conveyed to the discharge unit 15 while maintaining its temperature by the heater 14 provided outside the cylinder 12.

In other words, the heater 14 can be provided at any position from the upstream region 12UA to the downstream region 12DA of the cylinder 12 such that a predetermined heated state of the cylinder 12 can be obtained, and it is preferable to provide the heater 14 over most of the cylinder 12 in order to efficiently control the temperature.

In FIG. 1, the heater 14 is illustrated at a part (upper part) of the cylinder 12, but this is a schematic illustration, and it is preferable that the heater 14 is arranged to surround the outer periphery of the cylinder 12 such that the cylinder 12 on which the heater 14 is provided can be heated uniformly.

The discharge unit 15 is a member that is provided on the side of the downstream region 12DA (tip end) of the cylinder 12, and discharges the resin raw material that has been conveyed inside the cylinder 12 to the outside. The discharge unit 15 has, for example, an extrusion molding hole for extruding and molding, and the molded shape is determined by the shape of this hole. At this time, the hole can have various shapes, and an appropriate shape may be selected such that the resin raw material can be molded into the desired shape. For example, when molding it into a strand shape, a plurality of circular holes are provided, and when molding it into a sheet shape, a slit-shaped hole is provided.

Also, in this embodiment, the cooler 16 for cooling the cylinder 12 is provided in the downstream region 12DA of the cylinder 12. This cooler 16 is configured to cool the cylinder 12 such that its temperature can be adjusted.

The cooler 16 is not particularly limited as long as it exerts the above-mentioned action, but it is preferable that the cooler 16 is capable of cooling the cylinder 12 by heat exchange using a cooling fluid (refrigerant). Examples of the cooler 16 include a cooling jacket arranged outside the cylinder 12 and a configuration in which a flow path through which the cooling fluid (refrigerant) can flow is provided inside the cylinder wall constituting the cylinder 12 and the fluid is supplied to the flow path.

This cooler 16 exerts such an action to lower the temperature of the cylinder 12 to approach the set temperature when the cylinder 12 is excessively heated and the temperature of the cylinder 12 becomes higher than the set temperature. As described above, since shear energy is generated in the extrusion apparatus 10 when the resin is conveyed and kneaded by the screw 12a, the temperature of the cylinder 12 becomes higher than expected in some cases due to the thermal energy from the heater 14 and this shear energy.

The cooler 16 is a mechanism for lowering the temperature of the cylinder 12 to approach the set temperature when the temperature of the cylinder 12 becomes high as described above. In other words, the cooler 16 is provided in a location where the temperature of the resin raw material may become higher than the set temperature of the cylinder 12.

In this embodiment, the cooler 16 is configured to be able to lower the temperature of the cylinder 12 by performing heat exchange using a cooling fluid (refrigerant). The cooler 16 illustrated here is provided with a flow path through which a cooling fluid (refrigerant) capable of exchanging heat with the cylinder 12 flows, and has a fluid supply port 16a for supplying the fluid (refrigerant) into the flow path and a fluid discharge port 16b for discharging the fluid (refrigerant) that has been heated by flowing through the flow path.

FIG. 1 illustrates the case in which the cooler 16 is provided at a part (lower part) of the cylinder 12 in the downstream region 12DA, but it is preferable that the cooler 16 is arranged to surround the outer periphery of the cylinder 12 such that the cylinder 12 on which the cooler 16 is provided can be uniformly cooled as with the case of the heater 14 described above. In addition, the configuration in which a plurality of coolers 16 are provided so as to flow a cooling fluid (refrigerant) through each of them is also possible.

In addition, at the part of the cylinder 12 where the cooler 16 is provided, the heater 14 is also provided in addition to the cooler 16, and the cylinder 12 is heated by the heater 14 to the desired cylinder temperature and is not cooled by the cooler 16 until it is excessively heated. This cooler 16 operates to lower the cylinder temperature when the cylinder 12 is excessively heated.

This embodiment has the feature in that the pipe 17 arranged to connect the upstream region 12UA and the downstream region 12DA is provided. This pipe 17 is connected to the cooler 16 provided in the downstream region 12DA, so that the fluid (refrigerant) heated by heat exchange in the cooler 16 can be delivered from the downstream region 12DA to the upstream region 12UA.

The heated fluid (refrigerant) delivered through the pipe 17 is used to heat the cylinder 12 by heat exchange in the upstream region 12UA. With this configuration, the cylinder 12 in the upstream region 12UA can be heated not only by the energy from the heater 14 but also by the heated fluid (refrigerant) delivered through the pipe 17.

At this time, in order to heat the cylinder 12 by the heated fluid, the pipe 17 is provided so as to be able to deliver the fluid (refrigerant) to the part of the cylinder 12 in the upstream region 12UA whose temperature is lower than the temperature of the heated fluid (refrigerant). With this configuration, the cylinder 12 can be heated not only by the heater 14 but also by the heated fluid (refrigerant) delivered through the pipe 17.

Specifically, the auxiliary heater 18 configured to assist in heating the cylinder 12 is provided in the upstream region 12UA of the cylinder 12, and this auxiliary heater 18 and the pipe 17 are connected such that the heated fluid (refrigerant) can be supplied.

The auxiliary heater 18 is not particularly limited as long as it exerts the above-mentioned action, but it is preferable that the auxiliary heater 18 is capable of auxiliary heating of the cylinder 12 by heat exchange using a heated fluid (refrigerant). Examples of this auxiliary heater 18 include an auxiliary heating jacket arranged on the outside of the cylinder 12 and a configuration in which a flow path through which the heated fluid (refrigerant) can flow is provided inside the cylinder wall constituting the cylinder 12 and the fluid is supplied to the flow path.

The auxiliary heater 18 is a mechanism for heating the cylinder 12 in the upstream region 12UA where the temperature of the cylinder 12 is increased by heating. In other words, the auxiliary heater 18 is provided in a location where the cylinder 12 is heated together with the heater 14.

In this embodiment, the auxiliary heater 18 can increase the temperature of the cylinder 12 by performing the heat exchange using the heated fluid (refrigerant). The auxiliary heater 18 illustrated here has a flow path provided therein through which a heated fluid (refrigerant) capable of heat exchange with the cylinder 12 flows, and has a heated fluid inlet port 18a for supplying the fluid (refrigerant) into the flow path and a heated fluid discharge port 18b for discharging the fluid (refrigerant) whose temperature has been reduced by flowing through the flow path. The heated fluid inlet port 18a is connected to the pipe 17 such that the fluid can flow as described above.

FIG. 1 illustrates the case in which the auxiliary heater 18 is provided at a part (lower part) of the cylinder 12 in the upstream region 12UA, but it is preferable that the auxiliary heater 18 is arranged to surround the outer periphery of the cylinder 12 such that the cylinder 12 provided with the auxiliary heater 18 can be uniformly heated as with the case of the heater 14 described above. In addition, the configuration in which a plurality of auxiliary heaters 18 are provided so as to flow a heated fluid (refrigerant) through each of them is also possible.

The vent unit 19 is a member that is provided on the cylinder 12 and discharges gas generated in the cylinder 12 to the outside of the cylinder 12. As described above, the vent unit 19 is provided so as to be connected to the upper opening 12c of the cylinder 12. By providing the vent unit 19, gas does not remain inside the cylinder 12, making it possible to prevent an unnecessary pressurized state.

The vent unit 19 can be provided at any position on the cylinder 12, and is preferably provided in the downstream region 12DA where gas is likely to be generated. Although FIG. 1 illustrates an example in which the vent unit 19 is provided in one location, it may be provided in a plurality of locations.

Next, the structure of the screw 12a in the cylinder 12 provided in the extrusion apparatus 10 of this embodiment will be described.

As described above, the screw 12a is a member that exerts such an action to convey and knead the resin raw material. For example, as illustrated in FIG. 2, the screw 12a can be provided with a conveying section 12a1 and a kneading section 12a2 depending on its screw shape. In this case, it is preferable that the conveying section 12a1 is arranged in the upstream region 12UA of the cylinder 12 and the kneading section 12a2 is arranged in the downstream region 12DA of the cylinder 12. Note that it is also possible to arrange the kneading section 12a2 in the upstream region 12UA and arrange the conveying section 12a1 in the downstream region 12DA.

In other words, the number, length, and other arrangement of the conveying sections 12a1 and the kneading sections 12a2 can be arbitrarily set, and the optimal conditions may be set according to the type of resin raw material used and the adjustment state of the heating temperature of the cylinder 12.

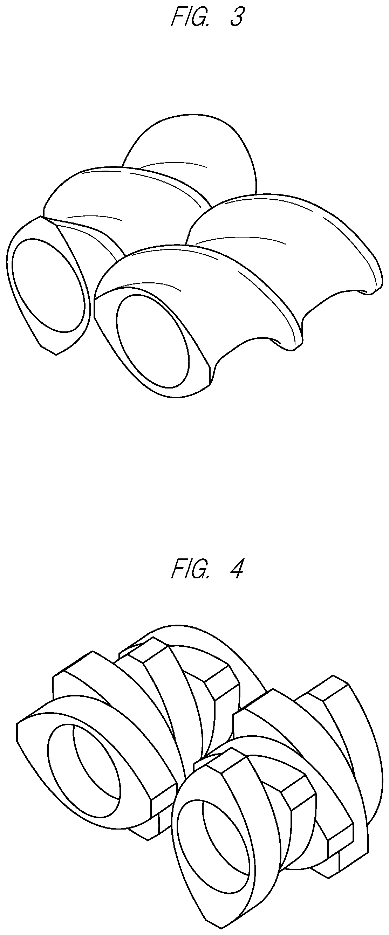

Here, the conveying section 12a1 which mainly conveys the resin raw material may be configured of a flight screw, and the kneading section 12a2 which mainly kneads the resin raw material may be configured of a kneading screw. FIG. 3 illustrates a perspective view of an example of the shape of a flight screw, and FIG. 4 illustrates a perspective view of an example of the shape of a kneading screw.

Note that the flight screw is a screw with a flight shape, and corresponds to a screw with flights formed on the outer peripheral side surface of the screw. Examples of such flights include full flight shapes and angular flight shapes. The full flight shape refers to a flight shape in which both side surfaces of the flight (that is, side surface on the upstream side and side surface on the downstream side) are formed in a curved (bent) shape. The full flight shape extends in a spiral on the side surface of the screw. Also, the angular flight shape refers to a flight shape in which both side surfaces of the flight (that is, side surface on the upstream side and side surface on the downstream side) are formed to be approximately perpendicular surfaces (perpendicular surface shape) to the outer peripheral side surface of the screw. The cross section of an angular flight shape is rectangular. An angular flight extends in a spiral on the side surface of the screw.

Further, the kneading screw refers to a screw that has a structure in which a plurality of kneading discs are overlapped while shifting their rotating positions as illustrated in FIG. **4****.** Each kneading disc has a roughly elliptical shape and has a long diameter portion and a short diameter portion.

Also, the direction in which the rotating positions of the plurality of kneading discs are shifted can be either a forward direction or a reverse direction. Here, the forward direction corresponds to the case where the rotation of the kneading screw produces an action to convey the resin raw material in the forward direction (to the downstream side). The case where the rotating positions of the plurality of kneading discs are shifted in the forward direction is referred to as a forward kneading screw, and FIG. 4 illustrates a forward kneading screw. In the case of FIG. 4, a plurality of kneading discs (five discs in this case) having the same shape are overlapped with their central axis directions aligned and their rotating positions (rotating positions around the central axis) shifted in the forward direction by 45° each.

Also, the reverse direction corresponds to the case where the rotation of the kneading disc produces an action to convey the resin raw material in the backward direction (to the upstream side). The case where the rotating positions of the plurality of kneading discs are shifted in the reverse direction is referred to as a reverse kneading screw. In this case, an example of a configuration in which the kneading discs are shifted in the opposite direction to that in FIG. 4 can be given. When shifted in the reverse direction, the resin raw material is blocked in the kneading section where the kneading screw is installed, so that a powerful kneading action can be obtained.

As described above, when conveying and kneading the resin raw material, the resin raw material is heated by the shear energy generated during kneading, so that there is a high possibility in this type of extrusion apparatus that the resin raw material is excessively heated in the kneading section 12a2 provided in the downstream region 12DA.

For this reason, it is preferable that the cooler 16 is provided at a position corresponding to the arrangement position of the kneading section 12a2 provided in the downstream region 12DA of the cylinder 12. By arranging it in such a corresponding relationship, when an excessively heated portion occurs in the cylinder 12, the cooler 16 can be immediately operated to lower the cylinder temperature.

### [Method of Kneading Resin Raw Material]

Next, each step of a method of kneading a resin raw material in this embodiment will be described based on the example in which the method is performed in the above-described extrusion apparatus 10 in FIG. 1.

First, the resin raw material prepared as described above is supplied from the resin raw material supply unit 11 into the cylinder 12. For example, the resin raw material containing a thermoplastic resin and others is fed to the resin raw material supply unit 11 (hopper) from above by a feeder or the like, and supplied to the cylinder 12.

The resin raw material supplied to the cylinder 12 is heated and melted by the heater 14 provided outside the cylinder 12 and the energy generated when the resin raw material is sheared by the screw 12a while being conveyed inside the cylinder 12 by the screw 12a arranged in the cylinder 12, and becomes a molten material [(a) heating step].

This heating step (a) is carried out in the upstream region 12UA of the cylinder 12. In this embodiment, the temperature during such steps as heating, melting, and kneading in the upstream region 12UA is usually about 100 to 300°C, and preferably about 100 to 250°C.

Then, the molten material thus obtained is conveyed by the screw 12a through the cylinder 12 to its downstream side (side of the discharge unit 15). During this conveyance, the raw material is sufficiently kneaded to be a uniform kneaded material. During this conveyance, the temperature inside the cylinder 12 is maintained such that the kneaded material flows smoothly. In other words, the temperature heated here is maintained, or the temperature at which the kneaded material can flow is maintained.

In this embodiment, the temperature of the cylinder 12 is adjusted and controlled such that the temperature of the resin raw material becomes a predetermined temperature as described above. For example, the cylinder 12 is formed by connecting a plurality of cylinder blocks, each cylinder block is provided with the heater 14 and a thermometer that can measure the temperature of the cylinder block, and the output of the heater 14 is controlled while monitoring the measured value by the thermometer such that each cylinder block is at the set temperature.

At this time, although the cylinder blocks are controlled to a predetermined temperature in the upstream region 12UA and the downstream region 12DA, respectively, the molten resin may be heated to a temperature higher than the set temperature due to the shear energy caused by the rotation of the screw 12a as described above. In this embodiment, when it is detected that the temperature of the cylinder block has become higher than the set temperature as described above, a cooling fluid (refrigerant) is supplied to the cooler 16 provided in the cylinder block, thereby reducing the temperature of the cylinder block by heat exchange [(b) cooling step]. In other words, this heat exchange using fluid (refrigerant) is performed as needed, and cooling using fluid (refrigerant) is not required all the time.

In addition, if the cooler 16 is provided in a plurality of locations on the cylinder 12, even when fluid (refrigerant) is to be supplied, it is possible to determine whether to supply the fluid (refrigerant) to all the coolers 16 or to only some of the coolers 16, depending on the temperature of the cylinder blocks provided with the coolers 16.

Note that this heat exchange using fluid (refrigerant) is performed when the temperature of the cylinder 12 in the downstream region 12DA becomes higher than its set temperature as described above, and it is preferable to change the supply amount of fluid (refrigerant) depending on the temperature difference between the set temperature and the actual temperature (actual measured value) in terms of effective temperature management.

For example, when the actual measured value is about 1 to 2°C higher than the set temperature, the supply of fluid (refrigerant) is not started and the temperature change is carefully observed, and when the temperature rises and the actual measured value is about 3 to 4°C higher, the supply of fluid (refrigerant) to the cooler 16 is started to supply a small amount of fluid (refrigerant). When the temperature rises further and the actual measured value is 5°C or more higher than the set temperature, the supply of fluid (refrigerant) to the cooler 16 is increased to supply a large amount of fluid (refrigerant), and when the actual measured value is 30°C or more higher, the supply of fluid (refrigerant) is fully increased. In this way, the supply amount of refrigerant can be changed according to the situation.

Here, the heat exchange using fluid (refrigerant) is performed by supplying the fluid (refrigerant) to the cooler 16. Namely, when the fluid (refrigerant) is supplied to the cooler 16 from the fluid supply port 16a, the fluid (refrigerant) exchanges heat with the cylinder 12 while flowing through a flow path provided inside the cooler 16, thereby lowering the temperature of the cylinder 12. This can reduce the temperature of the molten resin inside the cylinder 12 and prevent the temperature from becoming too high. The fluid (refrigerant) heated by the heat exchange is discharged from the fluid discharge port 16b.

In this way, the molten resin is extruded while adjusting its temperature, and discharged from the discharge unit 15 provided at the tip end of the cylinder 12 [(c) discharge step]. The extruded molten resin is discharged from a molding hole provided in the discharge unit 15, cooled to the external ambient temperature, solidified, and molded into the shape of the molding hole. This solidified molded material can be turned into a resin material by further cooling it and reducing its temperature by passing through water or the like.

The shape of the resin material obtained here is not particularly limited, but examples thereof include a strand shape and a sheet shape. The resin material molded into a strand shape or a sheet shape can be cut to the desired size and used as a molding material for resin products.

Further, this embodiment has the feature in that the heated fluid (refrigerant) obtained in the above step (b) is delivered to the upstream region 12UA and the thermal energy of this heated fluid (refrigerant) is used to heat the cylinder 12 in the upstream region 12UA.

Specifically, the heated fluid (refrigerant) discharged from the fluid discharge port 16b is supplied through the pipe 17 to the auxiliary heater 18 provided in the upstream region 12UA. The heated fluid (refrigerant) supplied to the auxiliary heater 18 in this way is supplied from the heated fluid inlet port 18a to the flow path provided in the auxiliary heater 18, and heats the cylinder 12 by heat exchange while flowing through the flow path. The fluid (refrigerant) whose temperature has been reduced by this heat exchange is discharged from the heated fluid discharge port 18b.

Here, the auxiliary heater 18 is provided at a part where the temperature of the cylinder 12 is lower than the temperature of the heated fluid (refrigerant). This is because, in order to raise the temperature of the cylinder 12 by heat exchange as described above, the temperature of the heated fluid (refrigerant) and the temperature of the cylinder 12 need to have the relationship described above.

Note that the temperature of the heated fluid (refrigerant) is preferably 5°C or more higher than the temperature of the cylinder 12 provided with the auxiliary heater 18, and more preferably 20°C or more higher. As the temperature difference becomes larger, the cylinder 12 can be heated more efficiently.

In addition, if the auxiliary heater 18 is provided in a plurality of locations on the cylinder 12, it is possible to determine whether to supply the heated fluid (refrigerant) to all the auxiliary heaters 18 or to only some of the auxiliary heaters 18, depending on the temperature of the cylinder blocks provided with the auxiliary heaters 18.

Note that this heat exchange using heated fluid (refrigerant) is performed on the cylinder 12 provided with the auxiliary heater 18 as described above, and it is preferable to change the supply amount of heated fluid (refrigerant) depending on the temperature difference between the set temperature and the actual temperature (actual measured value) in terms of effective temperature management.

As described above, the extrusion apparatus 10 according to this embodiment includes the heater 14 configured to supply the thermal energy and the cooler 16 configured to discharge the thermal energy, and the thermal energy will be wastefully consumed if these are independent of each other during the operation of the extrusion apparatus. In this respect, in this embodiment, the thermal energy discharged by the cooler 16 is utilized by the auxiliary heater 18, and the thermal energy can be effectively used and the energy usage efficiency in the entire extrusion apparatus can be successfully improved.

Note that the cooling fluid used here can be water, an ethylene glycol aqueous solution, oil, and others, and a water-cooling system using water is preferable from the viewpoint of cost and environmental issues. At this time, the heated fluid obtained by the cooler 16 reaches a temperature above the boiling point of the fluid in some cases, but in order to efficiently perform heat exchange by the auxiliary heater 18, it is preferable to apply pressure to the heated fluid (refrigerant) and supply it as a high-temperature fluid (refrigerant). In this case, a pressurizing pump is provided in the pipe connected to the fluid supply port 16a and a pressure adjustment valve is provided at the discharge port such that the fluid (refrigerant) can be supplied in a pressurized state at a predetermined pressure or higher.

### <Second Embodiment>

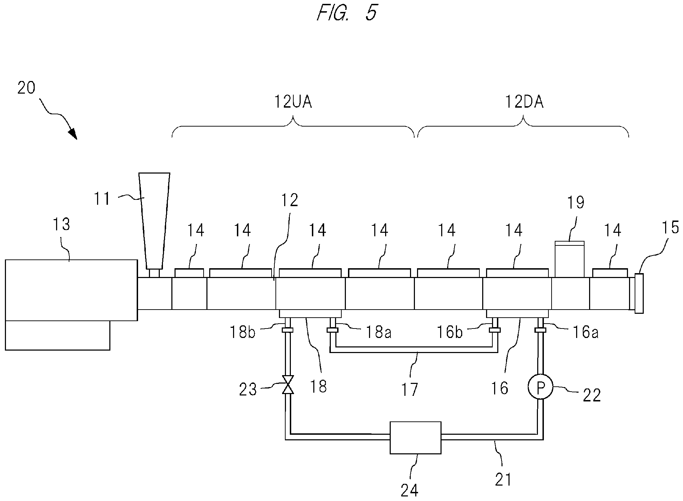

An overall configuration of an extrusion apparatus in this embodiment and a method of kneading a resin raw material using the same will be described with reference to FIG. 5.

### [Extrusion Apparatus]

FIG. 5 is an explanatory diagram illustrating a schematic configuration of an extrusion apparatus 20 according to the second embodiment. The extrusion apparatus 20 is an apparatus used to obtain a resin material for molding made of a sufficiently kneaded resin raw material by heating a resin raw material to soften and melt it therein and then extruding the molten resin from a discharge unit provided at one end thereof.

This extrusion apparatus 20 includes the resin raw material supply unit 11, the cylinder 12 having the upstream region 12UA and the downstream region 12DA and provided with a screw therein, the rotation drive mechanism 13 configured to drive the screw inside the cylinder 12, the heater 14 provided in the upstream region 12UA, the discharge unit 15, and the cooler 16 provided in the downstream region 12DA.

Further, the extrusion apparatus 20 includes the pipe 17 configured to connect the upstream region 12UA and the downstream region 12DA and connected to the cooler 16, the auxiliary heater 18 provided in the upstream region 12UA and connected to the pipe 17, and the vent unit 19 capable of exhausting gas generated in the cylinder.

Furthermore, the extrusion apparatus 20 includes a circulation pipe 21 configured to circulate the cooling fluid, a pressurizer 22, a pressure adjuster 23, and a condenser 24. In other words, the extrusion apparatus 20 has the feature in that the cooling fluid can be circulated in use. This embodiment is different from the first embodiment only in that it has the configuration for circulating the cooling fluid, and is the same in the other configurations. Hereinbelow, the description of the same configuration as that described above will be omitted, and the differences will be mainly described in detail.

The circulation pipe 21 is a pipe that is connected to the fluid supply port 16a and the heated fluid discharge port 18b and can circulate the fluid discharged from the heated fluid discharge port 18b and used for auxiliary heating to the fluid supply port 16a. By circulating the fluid (refrigerant) used for heat exchange in this way, cooling in the cooler 16 and heating in the auxiliary heater 18 can be performed efficiently.

This circulation pipe 21 is provided with the pressurizer 22, the pressure adjuster 23, and the condenser 24 such that the fluid (refrigerant) can be circulated efficiently and continuously exert a predetermined action. With this configuration, in the extrusion apparatus 20 illustrated in FIG. 5, the fluid (refrigerant) is heated in the cooler 16 and then cooled in the auxiliary heater 18 as described above.

The pressurizer 22 acts to make the fluid (refrigerant) be in the pressurized state during heat exchange in the cooler 16 and the auxiliary heater 18, and can be a pressurizing pump such as a plunger pump. In this embodiment, when water is used as the fluid (refrigerant), for example, the pressure should be about the saturated vapor pressure such as 1.55 MPa when the cylinder temperature of the downstream region 12DA is 200°C, 8.58 MPa when it is 300°C, and 16.5 MPa when it is 250°C, and is preferably set to the pressure according to the temperature.

The pressure adjuster 23 acts to reduce the pressure of the fluid (refrigerant) in the pressurized state by the pressurizer 22 and send the fluid (refrigerant) to the pressurizer 22 via the circulation pipe 21, and can be a pressure adjustment valve. In this embodiment, when water is used as the fluid (refrigerant), for example, it is preferable to set the pressure to about the saturated vapor pressure of the fluid (refrigerant) whose temperature has been reduced by heat exchange in the auxiliary heater 18.

The condenser 24, which is not an essential component and can be provided as needed, acts when all or most of the fluid (refrigerant) whose pressure has been reduced by the pressure adjuster 23 is gas and condenses at least a part of it into a fluid (refrigerant) in liquid form, and can be a cooler having a mechanism for cooling the fluid (refrigerant). In this embodiment, when water is used as the fluid (refrigerant), a known condenser, a so-called steam condenser, can be used.

In this embodiment, the resin raw material can be kneaded by performing the same operations as those in the first embodiment using the extrusion apparatus 20. Specifically, (a) the heating step, (b) the cooling step, and (c) the discharging step are performed, and the auxiliary heating is performed by the auxiliary heater 18 using the heated fluid (refrigerant) obtained by the cooler 16.

Furthermore, in this embodiment, the fluid (refrigerant) obtained by the auxiliary heater 18 is circulated through the circulation pipe 21 so as to be supplied again to the cooler 16. Hereinbelow, the process in which the fluid (refrigerant) is delivered from the cooler 16 through the pipe 17 to the auxiliary heater 18 and then reaches the cooler 16 through the circulation pipe 21 will be described, including the state of the fluid (refrigerant).

First, the fluid (refrigerant) at an ambient temperature is sent out in the pressurized state by the pressurizer 22, and the low-temperature, high-pressure fluid (refrigerant) is introduced into the cooler 16. The fluid (refrigerant) introduced into the cooler 16 lowers the temperature of the cylinder 12 by heat exchange with the cylinder 12, and the fluid (refrigerant) is heated to be a high-temperature, high-pressure heated fluid (refrigerant). At this time, the heated fluid (refrigerant) becomes a high-temperature, high-pressure liquid or gas (vapor) depending on its pressure and temperature, but conditions in which the fluid (refrigerant) becomes a gas (vapor) or a mixed fluid of gas (vapor) and liquid are preferable.

The heated fluid (refrigerant) thus obtained is introduced into the auxiliary heater 18 through the pipe 17. As described above, the fluid (refrigerant) introduced into the auxiliary heater 18 raises the temperature of the cylinder 12 by heat exchange with the cylinder 12, and the temperature of the fluid (refrigerant) is lowered. At this time, the temperature of the fluid (refrigerant) drops, but is still high as the state of circulated fluid (refrigerant). At this time, if the fluid (refrigerant) introduced into the auxiliary heater 18 is a gas (vapor) or a mixed fluid of gas (vapor) and liquid, the discharged fluid (refrigerant) is made to return to liquid or increase the proportion of liquid by the temperature drop. Therefore, the fluid (refrigerant) discharged from the auxiliary heater 18 is a high-temperature, high-pressure liquid or a mixed fluid of vapor and liquid, and this is sent out to the pressure adjuster 23.

Then, its pressure is reduced by the pressure adjuster 23 such as a pressure adjustment valve, becoming a high-temperature, low-pressure liquid or mixed fluid of vapor and liquid. Further, this high-temperature, low-pressure mixed fluid is cooled and condensed (liquefied) by the condenser 24 as necessary, and is partially liquefied. Note that the cooling in the condenser 24 is usually performed by heat exchange. This liquid or mixed fluid of vapor and liquid is pressurized again by the pressurizer 22 and supplied to the cooler 16.

In this way, the low-temperature, high-pressure fluid (refrigerant) supplied to the cooler 16 can repeat the operations of being heated again by heat exchange in the cooler 16 and then cooled by heat exchange in the auxiliary heater 18, as described above.

According to the above principle, since the fluid (refrigerant) is circulated in use, the thermal energy obtained by heat exchange in the cooler 16 can be used to heat the cylinder 12 by heat exchange in the auxiliary heater 18 in the extrusion apparatus 20, allowing the extrusion apparatus to be operated with small energy loss.

### [First Modification]

In the first and second embodiments above, it has been described that a plurality of auxiliary heaters 18 may be provided, and a specific example (first modification) in which a plurality of auxiliary heaters 18 are provided will be described below.

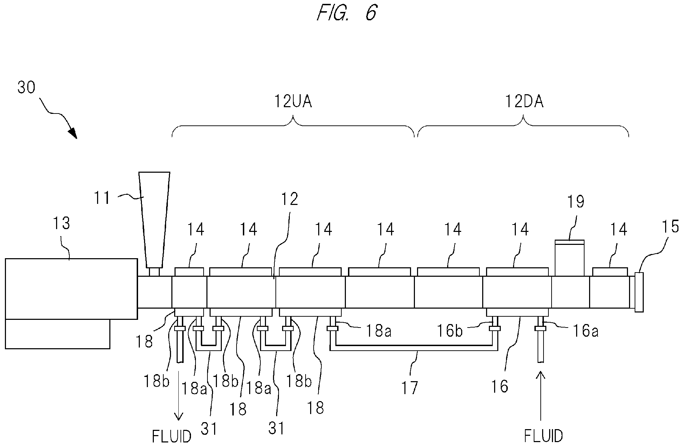

FIG. 6 is an explanatory diagram illustrating a schematic configuration of an extrusion apparatus 30 of this first modification. This extrusion apparatus 30 includes the resin raw material supply unit 11, the cylinder 12 having the upstream region 12UA and the downstream region 12DA and provided with the screw therein, the rotation drive mechanism 13 configured to drive the screw in the cylinder 12, the heater 14 provided in the upstream region 12UA, the discharge unit 15, and the cooler 16 provided in the downstream region 12DA.

The extrusion apparatus 30 further includes the pipe 17 configured to connect the upstream region 12UA and the downstream region 12DA and connected to the cooler 16, the auxiliary heater 18 provided in the upstream region 12UA and connected to the pipe 17, and the vent unit 19 capable of exhausting gas generated in the cylinder.

Here, the extrusion apparatus 30 is provided with a plurality of auxiliary heaters 18, and these auxiliary heaters 18 have the same configuration as that of the extrusion apparatus 10 described above except that they are connected to adjacent auxiliary heaters 18 by pipes 31. Hereinbelow, the differences will be mainly described, and the description of the same configuration will be omitted.

As illustrated in FIG. 6, the extrusion apparatus 30 of this first modification is provided with the plurality of auxiliary heaters 18 in the upstream region 12UA of the cylinder 12. Also, the auxiliary heaters 18 are connected to each other by the pipes 31. Namely, the heated fluid inlet port 18a of the auxiliary heater 18 provided on the most downstream side (side of the discharge unit 15) is connected to the fluid discharge port 16b of the cooler 16 by the pipe 17.

The heated fluid inlet ports 18a of the other auxiliary heaters 18 are connected to the heated fluid discharge ports 18b of the adjacent auxiliary heaters 18 by the pipes 31. Then, the fluid (refrigerant) used for auxiliary heating is discharged to the outside from the heated fluid discharge port 18b of the auxiliary heater 18 provided on the most upstream side (side of the resin raw material supply unit 11). In other words, it can be said that the plurality of auxiliary heaters 18 provided along the conveyance direction of the resin raw material in the cylinder 12 are connected in series by the pipes 31.

With the above configuration in the first modification, after the fluid (refrigerant) is heated by heat exchange in the cooler 16, it flows through the pipe 17, first flows through the auxiliary heater 18 on the most downstream side (side of the discharge unit 15) to heat the cylinder 12 by heat exchange, and then flows through the auxiliary heater 18 on the second most downstream side (side of the discharge unit 15) of the auxiliary heaters 18 to heat the cylinder 12 by heat exchange, so that it can heat the cylinder 12 by heat exchange by flowing through the auxiliary heaters 18 in order from the downstream side (side of the discharge unit 15).

At this time, the temperature of the heated fluid (refrigerant) drops due to heat exchange. Meanwhile, the temperature of the cylinder 12 gradually increases in the upstream region 12UA from the upstream side (side of the resin raw material supply unit 11) toward the downstream side (side of the discharge unit 15). In other words, the temperature of the cylinder 12 gradually decreases from the downstream side (side of the discharge unit 15) toward the upstream side (side of the resin raw material supply unit 11). Therefore, even the fluid (refrigerant) whose temperature has been once lowered in the auxiliary heater 18 can be used again for the auxiliary heating of the cylinder 12 located on the upstream side relative to that auxiliary heater 18.

The fluid (refrigerant) whose temperature has been lowered by flowing through all of the auxiliary heaters 18 is discharged from the heated fluid discharge port 18b located on the most upstream side, and is then processed or circulated for reuse.

In this case, for the effective heating, it is preferable that the temperature of the cylinder 12 to which the auxiliary heater 18 is provided and the temperature of the supplied fluid (refrigerant) are set such that the temperature of the supplied fluid (refrigerant) is higher than the temperature of the cylinder 12. In this way, it is possible to heat the cylinder 12 by any of the auxiliary heaters 18.

The configuration above is preferable because it is possible to efficiently use the thermal energy of the heated fluid (refrigerant) inside the extrusion apparatus 30.

### [Second Modification]

In addition, in the first and second embodiments above, it has been described that a plurality of auxiliary heaters 18 may be provided, and a specific example (second modification) in which a plurality of auxiliary heaters 18 are provided will be described below.

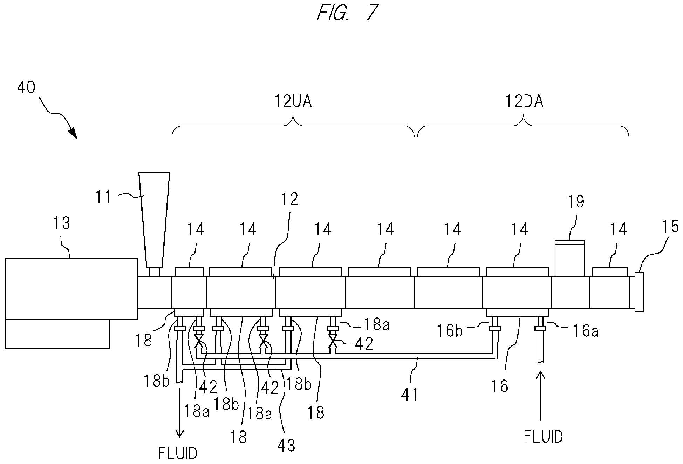

FIG. 7 is an explanatory diagram illustrating a schematic configuration of an extrusion apparatus 40 of this second modification. This extrusion apparatus 40 includes the resin raw material supply unit 11, the cylinder 12 having the upstream region 12UA and the downstream region 12DA and provided with the screw therein, the rotation drive mechanism 13 configured to drive the screw in the cylinder 12, the heater 14 provided in the upstream region 12UA, the discharge unit 15, and the cooler 16 provided in the downstream region 12DA.

The extrusion apparatus 40 further includes a pipe 41 configured to connect the upstream region 12UA and the downstream region 12DA and connected to the cooler 16, the auxiliary heater 18 provided in the upstream region 12UA and connected to a pipe 43, and the vent unit 19 capable of exhausting gas generated in the cylinder.

Here, the extrusion apparatus 40 is provided with a plurality of auxiliary heaters 18, the heated fluid inlet ports 18a of these auxiliary heaters 18 are each connected to the fluid discharge port 16b of the cooler 16 by the pipe 41, and an flow rate adjuster 42 is provided on each of the flow paths extending from the pipe 41 to the heated fluid inlet ports 18a. Also, each of the heated fluid discharge ports 18b is connected to the pipe 43. The extrusion apparatus 40 has the same configuration as that of the extrusion apparatus 10 described above except these points. Hereinbelow, the differences will be mainly described, and the description of the same configuration will be omitted.

The extrusion apparatus 40 of this second modification is provided with a plurality of auxiliary heaters 18 in the upstream region 12UA of the cylinder 12. Then, these auxiliary heaters 18 are each connected to the cooler 16 by the pipe 41. Namely, the heated fluid inlet ports 18a of all of the auxiliary heaters 18 are connected to the fluid discharge port 16b of the cooler 16 by the pipe 41. In other words, it can be said that the plurality of auxiliary heaters 18 provided along the conveyance direction of the resin raw material in the cylinder 12 are connected in parallel by the pipe 41.

With the above configuration in the second modification, after the fluid (refrigerant) is heated by heat exchange in the cooler 16, it is supplied to each auxiliary heater 18 through the pipe 41. The fluid (refrigerant) supplied to the auxiliary heater 18 can heat the cylinder 12 by heat exchange by flowing inside the auxiliary heater 18. At this time, the temperature of the fluid (refrigerant) is reduced by the heat exchange, and the fluid (refrigerant) whose temperature has been reduced is discharged from the heated fluid discharge port 18b. Here, each heated fluid discharge port 18b is connected to the pipe 43, so that the fluid is merged to be processed or circulated for reuse.

As described above, the cylinder 12 is usually heated by the heater 14, but the temperature thereof is set so as to gradually increase from the side of the resin raw material supply unit 11. Therefore, when the plurality of auxiliary heaters 18 are connected as in this modification, the amount of heated fluid (refrigerant) introduced from the pipe 41 can be changed for each auxiliary heater 18.

In other words, it is preferable to change the supply amount of the fluid (refrigerant) depending on the temperature difference between the temperature of the cylinder 12 and the temperature of the heated fluid (refrigerant). For example, since the temperature of the cylinder 12 gradually increases as described above, the temperature of the cylinder 12 on the downstream side (side of the discharge unit 15) is high and the temperature of the cylinder 12 on the upstream side (side of the resin raw material supply unit 11) is low. Therefore, the temperature difference between the temperature of the cylinder 12 and the temperature of the heated fluid (refrigerant) is small on the downstream side (side of the discharge unit 15) and large on the upstream side (side of the resin raw material supply unit 11).

Therefore, the supply amount of heated fluid (refrigerant) can be adjusted to be increased in the auxiliary heater 18 provided on the downstream side (side of the discharge unit 15) such that the energy amount by heat exchange can be secured even when the temperature difference is small, and the supply amount of fluid (refrigerant) can be adjusted to be reduced in the auxiliary heater 18 provided on the upstream side (side of the resin raw material supply unit 11) so as to prevent the excessive heating because the temperature difference is large and it is easy to secure the energy amount by heat exchange.

As described above, it is preferable to adjust the supply amount of heated fluid (refrigerant) introduced into the auxiliary heaters 18 so as to be gradually reduced from the downstream side (side of the discharge unit 15) toward the upstream side (side of the resin raw material supply unit 11) because the thermal energy of the heated fluid (refrigerant) can be used efficiently.

The adjustment of supply amount described above can be made by the flow rate adjusters 42 described above, and a thermometer or the like may be provided to measure the temperature of the cylinder 12 where the auxiliary heater 18 is provided such that the supply amount can be adjusted according to the measurement results thereof. A control unit to adjust the supply amount may be provided, and the supply amount can also be adjusted by the same control unit as that to adjust the temperature of the cylinder 12 by the heater 14.

In addition, in the first and second modifications above, it has been described that the plurality of auxiliary heaters 18 are provided and connected in series or in parallel, but the plurality of coolers 16 may be similarly provided and connected in series or in parallel.

This can be applied to any of the embodiments and modifications, and the connection method of each cooler 16 and the connection method of each auxiliary heater 18 can be independent of each other. More specifically, the connection methods in which the plurality of coolers 16 are connected in series and the plurality of auxiliary heaters 18 are also connected in series, in which the plurality of coolers 16 are connected in series and the plurality of auxiliary heaters 18 are connected in parallel, in which the plurality of coolers 16 are connected in parallel and the plurality of auxiliary heaters 18 are connected in series, and in which the plurality of coolers 16 are connected in parallel and the plurality of auxiliary heaters 18 are also connected in parallel are possible.

### <Third Embodiment>

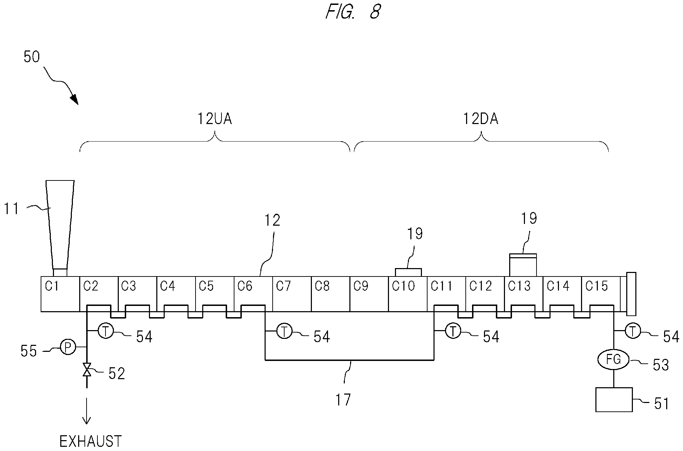

Next, an extrusion apparatus and a method for kneading a resin raw material according to another embodiment will be described with reference to FIG. 8.

An extrusion apparatus illustrated in FIG. 8 is an extrusion apparatus 50 as a twin-screw kneading extruder having a configuration in which 15 cylinder blocks (C1 to C15) are connected to form one cylinder and a flow path through which a cooling fluid can flow is provided inside each cylinder wall of these cylinder blocks. In the configuration of the extrusion apparatus 50 used in this embodiment, the flow paths of adjacent cylinder blocks C15 to C11 are connected in series, the flow paths of adjacent cylinder blocks C6 to C2 are connected in series, and the pipe 17 is provided to connect the fluid discharge port of the cylinder block C11 to the heated fluid inlet port of the cylinder block C6.

In FIG. 8, the flow path of fluid (refrigerant) is illustrated in a simplified manner, and the part inside the cylinder block region indicates the flow path of fluid (refrigerant) formed inside the cylinder wall. Also, the flow path of fluid (refrigerant) formed in the cylinder block is formed along the outer periphery thereof so as to uniformly cool the cylinder block.

In addition, the extrusion apparatus 50 is provided with a plunger pump 51 as a pressurizer, and the fluid (refrigerant) can be sent out in a pressurized state to the cylinder block C15. This fluid (refrigerant) flows in turn through the flow paths of each cylinder block from the cylinder block C15 to the cylinder block C11, and it flows through the pipe 17 when it is discharged from the cylinder block C11. The pipe 17 is connected to the cylinder block C6, and the fluid (refrigerant) then flows in turn through the flow paths of each cylinder block from the cylinder block C6 to the cylinder block C2 and is released as gas to the outside atmosphere by the pressure adjustment valve 52 when it is discharged from the cylinder block C2.

In other words, the fluid (refrigerant) flows in the opposite direction to the conveyance direction of the resin raw material in this configuration. Also, with the above configuration, the fluid (refrigerant) can be kept pressurized from the plunger pump 51 to the pressure adjustment valve 52. In addition, the extrusion apparatus 50 is provided with a flow meter 53, a thermometer 54, and a pressure gauge 55 in the flow path through which this cooling fluid flows.

This extrusion apparatus 50 can be used to knead a resin raw material as follows. First, polypropylene pellets and talc as a filler are prepared as the resin raw material. The polypropylene and talc are supplied from the resin raw material supply unit 11 at a desired mixing ratio, for example, 40% by mass of talc, and gradually heated and melted in the upstream region 12UA of the cylinder 12. Next, the resin raw material is kneaded while maintaining the melting temperature in the downstream region 12DA of the cylinder 12, and discharged from the discharge unit when it has been sufficiently kneaded.

At this time, when the cylinder temperature in the downstream region 12DA becomes higher than the set temperature, cooling water (pure water at ambient temperature) as a cooling fluid is supplied from the plunger pump 51 at, for example, 4.8 L/min. The supplied cooling water flows through the flow paths provided in the cylinder walls of each cylinder block from the cylinder block C15 to the cylinder block C11 while being gradually heated by heat exchange with the cylinder 12, and is then discharged from the cylinder block C11 to the pipe 17.

Then, the cooling water flows through the pipe 17 and is introduced into the cylinder block C6, and the cooling water flows in the pipe 17 as high-temperature, high-pressure steam with, for example, a maximum internal steam pressure of 3 MPa and a temperature of 240°C.

The high-temperature, high-pressure steam thus obtained then flows through the flow paths provided in the cylinder walls of each cylinder block from the cylinder block C6 to the cylinder block C2. Since the temperature of the cylinder block C6 to the cylinder block C2 is lower than that of the obtained high-temperature, high-pressure steam, the high-temperature, high-pressure steam is gradually cooled while exchanging heat with the cylinder 12, and is discharged from the cylinder block C2. The high-temperature, high-pressure steam is cooled and partially liquefied by heat exchange in the upstream region 12UA, and the pressure thereof is reduced by the pressure adjustment valve 52, allowing it to be discharged directly into the outside atmosphere.

It was found that the extrusion apparatus 50 with the configuration illustrated in FIG. 8 can reduce the heater output by about 41% compared with a normal kneading process of filler compound using an extrusion apparatus with the configuration in which cooling water is supplied at normal pressure and is discharged as hot water from the cylinder block C11 without providing the pipe 17 relative to this extrusion apparatus 50, and can further reduce the heater output in an energy-intensive kneading process.

As described above, it can be understood from this embodiment that it is possible to provide an excellent extrusion apparatus capable of effectively using the energy in the extrusion apparatus 50 and reducing the energy loss by using the thermal energy obtained in the downstream region 12DA for the heating in the upstream region UA using a cooling fluid.

In the foregoing, the present invention has been specifically described based on embodiments and examples, but the present invention should not be interpreted as being limited to these embodiments and examples, and it goes without saying that various modifications are possible within the range not departing from the gist of the invention.

### REFERENCE SIGNS LIST

10, 20, 30, 40, 50 extrusion apparatus
11 resin raw material supply unit
12 cylinder
12a screw
12b, 12c upper opening
12UA upstream region
12DA downstream region
13 rotation drive mechanism
14 heater
15 discharge unit
16 cooler
17, 31, 41, 43 pipe
18 auxiliary heater
19 vent unit
21 circulation pipe
22 pressurizer
23 pressure adjuster
24 condenser
42 flow rate adjuster
51 plunger pump
52 pressure adjustment valve
53 flow meter
54 thermometer
55 pressure gauge

## Claims

1. An extrusion apparatus comprising:
a cylinder having a first region and a second region;
a supply unit of a resin raw material provided on a side of the first region of the cylinder;
a screw arranged inside the cylinder and configured to convey and knead the resin raw material;
a discharge unit of the resin raw material provided on a side of the second region of the cylinder;
a heater provided in the first region of the cylinder and configured to heat the resin raw material;
a cooler provided in the second region of the cylinder and configured to cool the cylinder; and
a pipe arranged so as to connect the first region and the second region of the cylinder and connected to the cooler.

2. The extrusion apparatus according to claim 1,
wherein the cooler is a cooling system by heat exchange using a fluid and has a first flow path through which the fluid flows.

3. The extrusion apparatus according to claim 2,
wherein the cooler is a water-cooling system, and
wherein a water vapor or a mixture of a water vapor and water flows through the pipe.

4. The extrusion apparatus according to claim 2,
wherein the first flow path of the cooler is formed inside a cylinder wall constituting the cylinder.

5. The extrusion apparatus according to claim 2, further comprising an auxiliary heater having a second flow path through which a heated fluid obtained from the cooler flows and capable of heating the cylinder in the first region by heat exchange using the heated fluid.

6. The extrusion apparatus according to claim 5,
wherein the auxiliary heater is plurally provided, and the second flow paths of the adjacent auxiliary heaters are connected to each other.

7. The extrusion apparatus according to claim 5,
wherein the auxiliary heater is plurally provided, and the second flow paths are each connected to the pipe.

8. The extrusion apparatus according to claim 6, further comprising:
a first thermometer configured to measure a temperature of the heated fluid obtained from the cooler;
a second thermometer configured to measure a temperature of the cylinder in the first region; and
a control unit configured to deliver the heated fluid to the auxiliary heater arranged in the cylinder whose temperature is lower than the temperature of the heated fluid based on measurement results of the first thermometer and the second thermometer.

9. The extrusion apparatus according to claim 1,
wherein the screw has a conveying section and a kneading section,
wherein the conveying section is arranged in the first region of the cylinder, and
wherein the kneading section is arranged in the second region of the cylinder.

10. The extrusion apparatus according to claim **2,** further comprising a circulation pipe configured to circulate the fluid, which flows through the pipe, from the first region to the cooler.

11. A method of kneading a resin raw material comprising:
(a) heating and melting the resin raw material supplied to a cylinder having a first region and a second region by a heater provided in the first region while conveying it inside the cylinder by a screw;
(b) after the (a), cooling the cylinder by a cooler provided in the second region of the cylinder while kneading the resin raw material;
(c) after the (b), discharging a kneaded material of the resin raw material from a discharge unit provided at a tip end of the cylinder; and
(d) flowing a fluid from the second region to the first region.

12. The method of kneading the resin raw material according to claim 11,
wherein the fluid in the (d) flows through a pipe connecting the first region and the second region.

13. The method of kneading the resin raw material according to claim 12,
wherein the cooler is a cooling system by heat exchange using a fluid and has a first flow path through which the fluid flows.

14. The method of kneading the resin raw material according to claim 13,
wherein the cooler is a water-cooling system, and
wherein a water vapor or a mixture of a water vapor and water flows through the pipe.

15. The method of kneading the resin raw material according to claim 13,
wherein the first flow path of the cooler is formed inside a cylinder wall constituting the cylinder.

16. The method of kneading the resin raw material according to claim 13,
wherein, in the (d), auxiliary heating of the cylinder is performed using an auxiliary heater having a second flow path through which a heated fluid obtained from the cooler flows and capable of heating the cylinder in the first region by heat exchange using the heated fluid.

17. The method of kneading the resin raw material according to claim 16,
wherein the auxiliary heater is plurally provided, and the second flow paths of the adjacent auxiliary heaters are connected to each other.

18. The method of kneading the resin raw material according to claim 16,
wherein the auxiliary heater is plurally provided, and the second flow paths are each connected to the pipe.

19. The method of kneading the resin raw material according to claim 17, further comprising:
measuring a temperature of the heated fluid obtained from the cooler using a first thermometer;
measuring a temperature of the cylinder in the first region using a second thermometer; and
delivering the heated fluid to the auxiliary heater arranged in the cylinder whose temperature is lower than the temperature of the heated fluid based on measurement results of the first thermometer and the second thermometer.

20. The method of kneading the resin raw material according to claim 11,
wherein the screw has a conveying section and a kneading section,
wherein the conveying section is arranged in the first region of the cylinder, and
wherein the kneading section is arranged in the second region of the cylinder.

21. The method of kneading the resin raw material according to claim 13, further comprising circulating the fluid, which flows through the pipe, from the first region to the cooler by a circulation pipe.
